# EUROPEAN PATENT APPLICATION

(11) **EP 1 510 289 A2**
(43) Date of publication of application: **02.03.2005**
(21) Application number: 03019145.6
(22) Date of filing: 25.08.2003
(51) Int. Cl.: B24B 9/02, B24B 47/22

(54) **method for stack grinding**

(30) Priority: 25.08.2003 DK 200201273
(71) Applicant: RoboTool Holding ApS, Nyby, 6600 Vejen (DK)
(72) Inventor: Leif, Thomsen, Nyby, 6600 Vejen (DK); Flemming, Jörgensen, 5250 Odense SV (DK)
(74) Representative: Nielsen, Leif

(57) **Abstract**

A method for machining stacks (102) of plates or sheets, preferably by grinding stacks, where the contours of the sheets in the stack (102) are pre-programmed in a computer program, before a stack of sheets are moved to a work station (101) with an edge machining tool (107). A measuring arm (113) is following a part of the edge of the stack (102) while moving the stack past the measuring arm (113), resulting in movement of the measuring arm (113). The position and the movement of the measuring arm (113) are measured with measuring equipment for determining the orientation of the stack and the position of the stack (102) in the work station with a computer (127) and by the pre-programmed contours, before the stack is machined with regard to the pre-programmed contours and the determined stack orientation and stack position.

## Description

The present invention concerns a method for machining stacks of items, preferably tabletops, by means of a robot.

### Description of Prior Art

When machining items with identical contours, e.g. plates, in many cases it may be advantageous to machine a number of plates at the same time. Thus it is known to machine plates in stacks, e.g. glass plates or boards/plates for the furniture industry.

From EP patent application EP 1 195 227 by Karsten Kristiansen is known an apparatus for grinding stacks of plates along their edges, where grinding cylinders are following the contour of the stack. The grinding cylinder has a length corresponding to the height of the stack, so that all plates in the stack are ground at the same time. The grinding cylinder is following a pre-programmed grinding course. The pre-programming is performed manually by a registering wheel being followed while in contact with the stack edge all the way around the stack. This programming method is inexpedient in that it takes relatively long time and requires operators for programming each new stack, which is inexpedient in an industry with increasing automation due to sharpened competition.

Correspondingly, an apparatus is known from EP patent application 1 034 882, also with a grinding cylinder which in a not specified, programmed manner can run around a stack of plates.

Grinding or sanding stacks of plates in an automatic way is known from the firm Quickwood, where a stack of plates from a roller track is rolled in on a turntable, where the stack under turning of the table is measured with a set of rollers for determining the edge course of the stack. Using a turntable for measuring and machining stacks is an expensive, slow and complicated solution.

It is also known to use vision systems where stacks of plates are photographed with a video camera and then evaluated in a computer program for finding the required path for the grinding cylinder. Such camera based measuring programs are relatively slow and expensive. Besides, there is great risk of steel from the grinding will cover the objective of the camera, causing defective measurements.

### Description of the Invention

It is therefore the purpose of the invention to provide an automated system for machining stacks, however preferably stack grinding, which is more simple and cheap than known systems and is simultaneously safe in operation and rapid.

This purpose is achieved with a method for machining stacks of sheets or plates, preferably by grinding stacks, including the steps:
- where the contours of the sheets in the stack are pre-programmed in a computer program;
- where a stack of sheets is moved to a work station with an edge machining tool;
- where at least one measuring arm is provided, following a part of the edge of the stack while moving the stack past the at least one measuring arm, which results in a movement of the at least one measuring arm;
- where the position and the movement of the at least one measuring arm is measured with measuring equipment for determining the orientation of the stack and the position of the stack in the work station with a computer and by the pre-programmed contours; and
- where the stack is machined with regard to the pre-programmed contours and the determined stack orientation and stack position.

By using at least one measuring arm to follow the stack edge, the orientation and position of the stack on the conveyor is determined in a computer if the stack contours are known. This is a very rapid and simple method that provides an accurate result. Furthermore, the method is cheap to establish. The machining of the stack is typically performed with a robot arm provided with a machining tool, e.g. a tool for grinding, milling or boring.

The position of the measuring arm may be determined by at least one encoder being functionally connected with the at least one measuring arm, where data from the at least one encoder is indicative for the position of the at least one measuring arm, and where the data from the at least one encoder is used for determining the stack orientation and the stack position in the work station.

E.g. the measuring arm may be provided rotatably at the side of the conveyor and extend in over the track over a part of the width of the track, e.g. half of the width of the track. When the track is transported past the measuring arm, the stack will push to the measuring arm which thereby turns about its point of rotation, whereby the encoder transforms the position of the measuring arm to measuring data which are sent to the computer that may calculate stack position and stack orientation on the basis of the position.

The pre-programming of the stack contours may be performed with different degree of detailing. E.g. the contours of the stack may be pre-programmed by means of CAD-data (Computer Aided Design). CAD drawings are commonly used in designing furniture etc. Data from this type of drawings may be used directly for pre-programming the contour of the stack.

Simplification of the pre-programming is achieved in that the measured movement from the at least one measuring arm is approximated to straight lengths and/or circular arcs, where these straight lengths and/or circular arcs are compared with the pre-programmed contours of the sheets in the stack in order thereby to determine the stack orientation and the stack position. If the stack e.g. has straight edges, such a straight edge may be identified from its length, after the measuring arm, or e.g. the end of the measuring arm, has followed the edge. The length of the edge is known on the basis of how far the conveyor has conveyed the stack during the measurement with the measuring arm. The same is the case of edges with circular arcs. In principle, any kind of edge may be approximated parametrically with polynomials of arbitrary degree. Straight lengths of edges and circular arcs are, however, preferred, as the calculation of the orientation is thereby easy and quick.

The contour of the stack is only needed to be known to a certain degree. If e.g. it is pre-supposed that the case is rectangular stacks, a measurement with two measuring arms disposed at opposite sides of the stack would be sufficient to determine the width and the length of the stack. In this case, the contours can be pre-programmed parametrically as rectangular items with variable width and length. Correspondingly, the contours may be pre-programmed containing information about edge radius of the plates in the stack.

In a second embodiment of the invention, the stack is carried on a conveyor with indication of position. By indication of position is meant an indication of the position of the conveyor relative to a selected reference point. If the conveyor includes a number of rollers, where the rollers are mutually coupled or in other ways synchronised for controlled transport of the stack, such an indication of position may be provided by means of a revolution counter for one of the rollers. It is noted that the conveyor does not have to be a single conveyor but may be composed of sections that have a coupled position indication in a synchronised manner. Decisive in that connection is achieving knowledge of the advance of the stack. If the leading point of the stack, or the trailing point of the stack, or both points are determined and related to the indication of position, the position of the stack on the conveyor may be determined in longitudinal direction of the conveyor. If the leading and the trailing points are measured, the length of the stack may be determined accurately if the orientation of the stack is known.

In order to measure these points, the method according to the invention includes a further embodiment wherein there is provided a photocell and a light emitter arranged at each their side of the conveyor, so that the light from the light emitter impinges on the photocell if no objects are placed on the conveyor between the light emitter and the photocell. The photocell is functionally connected with the position indication for by interruption of the light from the light emitter to determine the position of the leading point of the stack and optionally the trailing point of the stack on the conveyor during movement of the stack.

The invention also provides for an apparatus for machining a stack of plates or sheets, preferably grinding of stacks, including:
- a computer which is pre-programmed with the contours of the stack;
- a conveyor for moving the stack to a work station;
- a measuring arm provided for following a part of the edge of the stack during movement of the stack past the measuring arm, resulting in moving the measuring arm;
- measuring equipment for measuring the position of the measuring arm; and
- a computer functionally coupled to the measuring equipment and configured to receive data indicating position and movement of the measuring arm and together with the pre-programmed contours to determine the orientation and the position of the stack in the work station.

The measuring equipment may include an encoder that is functionally connected with the measuring arm, where data from the encoder is indicative of the position of the measuring arm. It is preferred that the at least one measuring arm is rotatably provided at the side of the conveyor and extends partly in over the conveyor. Furthermore, the conveyor is provided with indication of position of the conveyor relative to a selected reference point.

The apparatus includes a photocell and a light emitter arranged at each their side of the conveyor so that the light from the light emitter impinges on the photo cell if no objects are placed on the conveyor between the light emitter and the photocell, where the photocell is functionally connected with the position indication for by interruption of the light from the light emitter to determine the position of the leading point of stack and optionally the trailing point of the stack on the conveyor during movement of the stack.

The machined stack, e.g. the ground and bored stack, is most often to be further treated in a finishing station, typically by coating the stack. In that case it is an advantage that the computer is configured to use the stack position and stack orientation determined in the first machining station for determining the stack position and stack orientation in the finishing station. In this way, the measured data are utilised in an optimal way with corresponding rapid treatment of the stack in the machining station and in the finishing station. Besides, it is to be noted that the number of machining stations in principle is not limited for utilising the invention, and neither the number of finishing stations.

Sometimes stacks of sheets or plates are built up, where the sheets or plates have different sizes. For example, a number of plates are laid at the bottom of the stack, where these plates are the largest and project outside the plates that subsequently are laid upon the first plates. Thus there may be built a stack of plates where the uppermost plates are the least, and the lowermost the largest, and where in-between further plates with contour may be placed, the latter having a contour within the contour of the lowermost plates and outside the contour of the uppermost plates. Thereby, the number of stacks is reduced. If the plates are provided in sets of plates with uniform contour and there is provided a distance between these sets of plates, the individual sets of plates may be machined in a simple way in the machining station by means of a programmed robot arm grinding, sanding, or in other ways machining the plate sets at different levels relative to the conveyor. A set of plates is here to be understood as a number meaning at least one plate. I.e. it is also possible to built up a stack of single plates for machining. In order to provide for a controlled machining of the individual sets in the stack, where the sets may have different thickness, in a further development of the invention there is provided for the apparatus also including a robot arm with a further light emitter and with a further photocell, where the further photocell is arranged to receive light from the further light emitter, where this light is reflected from the upper surfaces of the stack for determining the sectional structure of the stack, e.g. a structure like a pyramid.

This light emitter with photocell for measuring the height of the stack may also be utilised for determining a possible inner edge of the stack, e.g. the inner edge of the stack of window frames or showcase doors. Thereby is provided for possible machining, e.g. grinding, milling, of the inner edge of the stack in the machining station.

It is furthermore an advantage if the apparatus also includes at least one holder device that may press upon the stack for preventing the stack from being displaced during machining in the work station.

The robot arm for edge machining of the stack in the work station may be the same as the previously mentioned robot arm with the photocell, whereby is achieved an integrated unit. For machining, the robot arm is functionally coupled to the computer for determining the movement of the robot arm relative to the edge course of the stack from the pre-programmed contours, the stack position and the stack orientation.

### Short Description of the Drawing

The invention is explained in further detail with reference to the drawing, where:
- Fig. 1: shows an apparatus according to the invention in perspective view;
- Fig. 2: shows the apparatus from above;
- Fig. 3: shows the apparatus from the side;
- Fig. 4: shows an enlarged detail of Fig. 2;
- Fig. 5: is a drawing of the pressing arm;
- Fig. 6: shows the measuring arms in greater detail as well as the photocells with light emitters;
- Fig. 7: shows the measuring arm in perspective view;
- Fig. 8: shows the measuring arm and the encoder in side perspective view; and
- Fig. 9: illustrates four situation for the movement of the stack past the measuring arm with x,y-diagram.

### Detailed Description

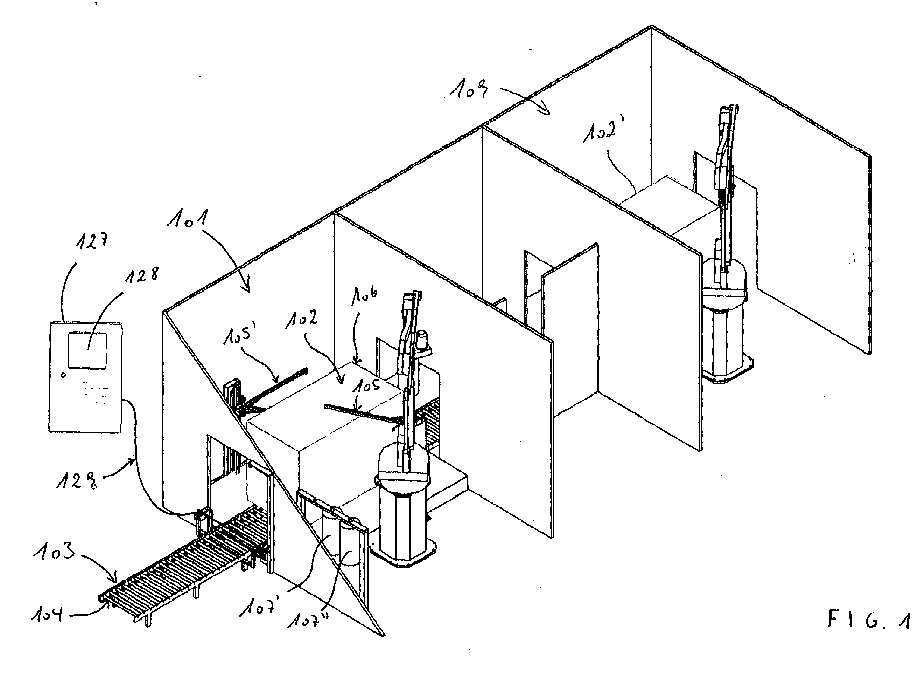

On Figs. 1 - 4 is shown an apparatus according to the invention. The apparatus includes a work station 101 for machining stacks 102 of plates, e.g. wooden plates, plywood boards, laminwood or laminated sheets for the furniture industry. The stack 102 is rolled in on the work station 101 by means of a conveyor 103 which in this case consists of rollers 104 that are mutually coupled at least in sections, or synchronised in other way for controlling the conveying of the stack 102. Due to such synchronisation or mutual coupling it is sufficient that for each section there is provided an encoder with a revolution counter for one of the rollers 104 in a section. Thereby is achieved an indication of position of the rollerway 103 relative to the reference point which can be selected arbitrarily. Such indication of position is suitable in order that the position of the stack 102 on the conveyor 103 is known and may be used for controlled transport of the stack 102.

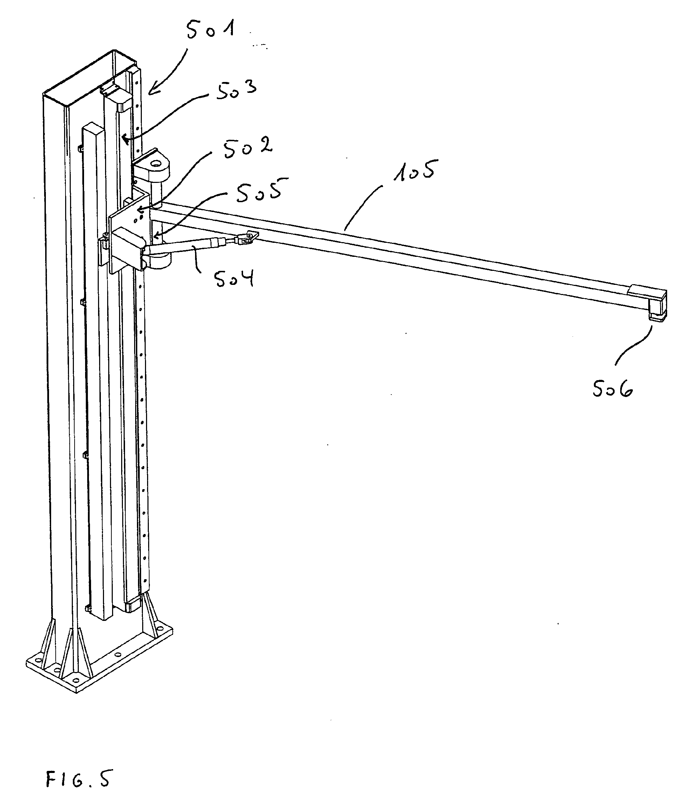

When the stack 102 has been transported into the work station 101 and has come to rest in this work station 101, a holder device, in this case with a pressing arm 105, is used for pressing upon the stack 102 in order to prevent the stack 102 from being displaced during the machining in the work station 101. The holder device 501 is shown in greater detail on Fig. 5. The pressing arm 105 is connected with a slide 502 which is suspended sliding on a vertical rail 503 for adjusting the level of the pressing arm 105. By means of a hydraulic or pneumatic cylinder 504, the pressing arm 105 may be adjusted in rotation about a journaling axle 505. The pressing arm 105 is furthermore provided with a spring-loaded switch 506 at the end of the arm 105. This switch 506 acknowledges in the program for the pressing arm having reached the item, for the downward movement of the arm 105 to stop and for the machining of the stack 102 to commence.

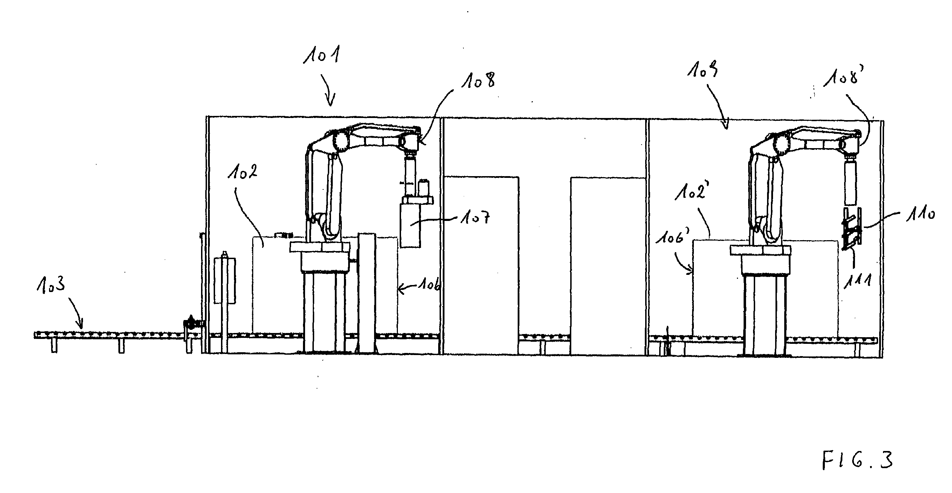

If the outer edge 106 of the stack 102 is known, the contour of this edge 106 may be machined with a machining tool 107, shown more clearly on Fig. 3. Such a machining tool 107 is typically a sanding cylinder with sanding strips. The machining tool 107 is moved in a suitable path around edge 106 of the stack by means of robot arm 108 that has a programmed path provided by means of computer calculations.

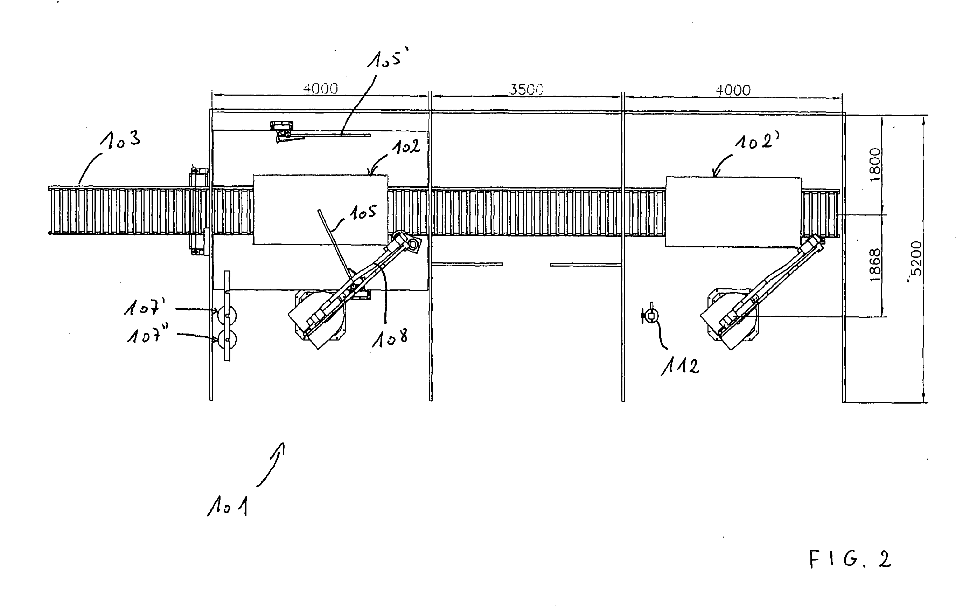

Such a robot arm 108 can be used for e.g. grinding, milling and boring, and by means of suitable programming it may automatically shift between different machining tools 107' and 107", shown more clearly on Figs. 1 and 2. When the robot arm 108 with the machining tool 107 is moved with contact point around the edge contour 106 all the way around the stack 102, the pressing arm 105 will eventually interfere with the tool 107. In order to prevent this, there is provided a further pressing arm 105' that remain in rest position outside the edge contour 106 of the stack 102 until the machining tool 107 approaches the pressing arm 105. At this time, the further pressing arm 105' is swinging in upon the stack 102 and presses down on the stack, after which the pressing arm 105 is lifted from the stack and swings to a position of rest so that the tool 107 can run along the edge area 106 around the position where the pressing arm 105 previously crossed the edge 106 of the stack 102. I.e., the pressing arm 105 and the further pressing arm 105' are alternatingly pressing the stack, while the robot arm 108 moves the machining tool 107 around the stack 102.

If the position and the orientation of the stack 102 on the conveyor 103 are known, these data may also be used for calculating position and orientation of the stack 102 in a finishing station 109, where, as shown in Fig. 1, there is positioned another stack 102' for finishing, while the stack 102 is machined in the work station 101. The finishing treatment in the finishing station 109 is e.g. painting or coating the edge 106' of the stack 102' by means of a suitable tool 110, e.g. a tool provided with various spray nozzles 111 that may also be used if the stack 102' is hollow, because it possibly concerns a stack of window frames or showcase doors. In that case, the robot arm 108' in the finishing station 109 will be programmed to move the finishing tool 111 down into the hole within the stack 106'. Such a hole is, however, not shown on the Figures.

The positioning of the stack 102' in the finishing station 109 may easily be determined if all rollers 104 in the conveyor are coupled and synchronised. This will, however, be very impractical in many cases, why the rollerway is preferably divided into sections that may operate independently, though being positionally coupled or synchronised in other ways. In order to indicate the time for when the stack is entering the finishing station, the time being synchronised with the position indication of the conveyor 103, the finishing station 109 may furthermore be provided with a photocell and a light emitter that are disposed at each their side of the rollerway 103. When the stack is rolling into the finishing station, it will, however, prevent the light from the light emitter from reaching the photocell, whereby a precise positioning of the stack 102' may easily be provided. As alternative to a light emitter and photocell disposed at each their side of the rollerway, it is possible to provide a light emitter with photocell as a unit 112 as illustrated on Fig. 2. The photocell measures the light reflected from the stack 102' when it crosses the light path during its movement. Such a unit with light emitter and photocell 112 may also be used in the machining station 101 or before the machining station 101 for calculating the length of the stack 102 and the position on the conveyor 103.

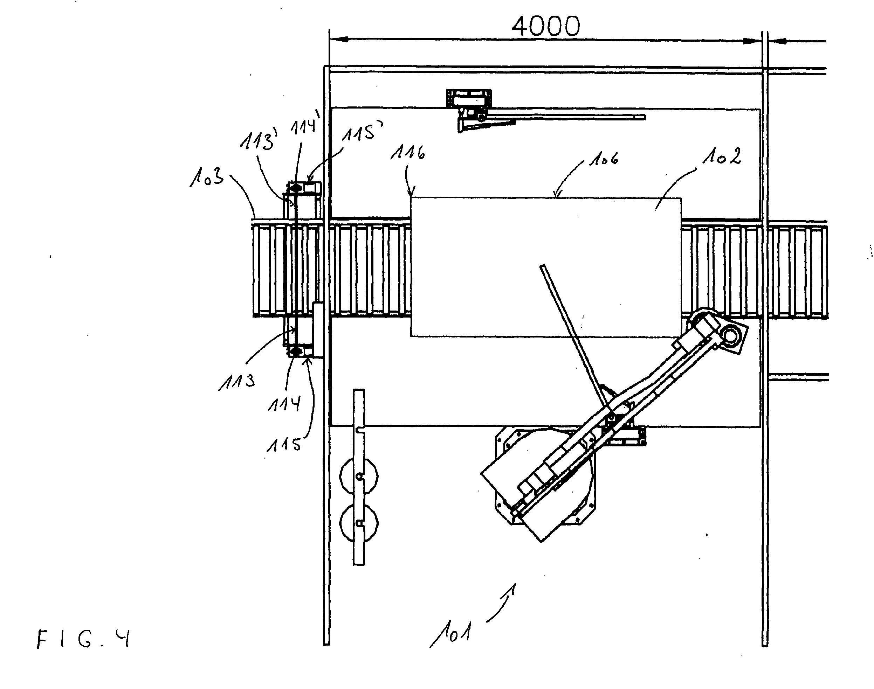

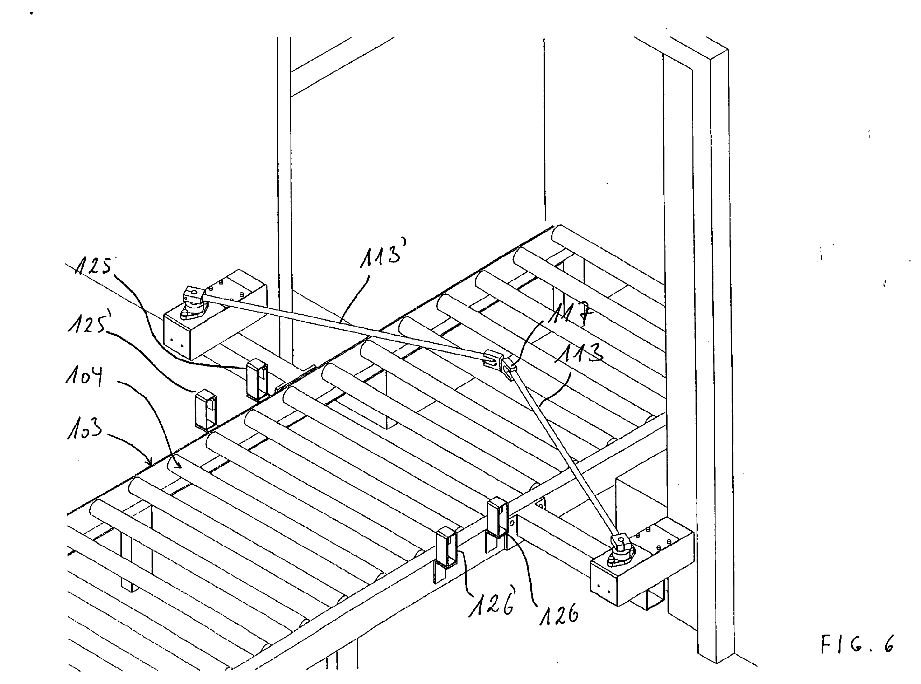

For calculating the position and orientation of the stack 102 is used two measuring arms 113 and 113', as shown on Fig. 4. These are shown in greater detail on Figs. 6 - 8. The measuring arms 113, 113' are provided rotatable about an axle 114 and 114', respectively. By rotating the measuring arm 113 a suitable encoder 115 and 115', respectively, the angle of the measuring arm 113, 113' in relation to a given reference point. When the stack 102 is moved past the measuring arms 113, 113', the stack 102 will press the measuring arms 113, 113' away from their reference point orientation. During movement of the stack 102, the point 117 of the am 113, 113' will slide along a part of the edge contour 106 of the stack 102. The point 117, 118 of the arm 113 may be provided with a switch or other kind of sensor for controlling whether the edge of the stack is touched with the point 117, 118 of the arm 113.

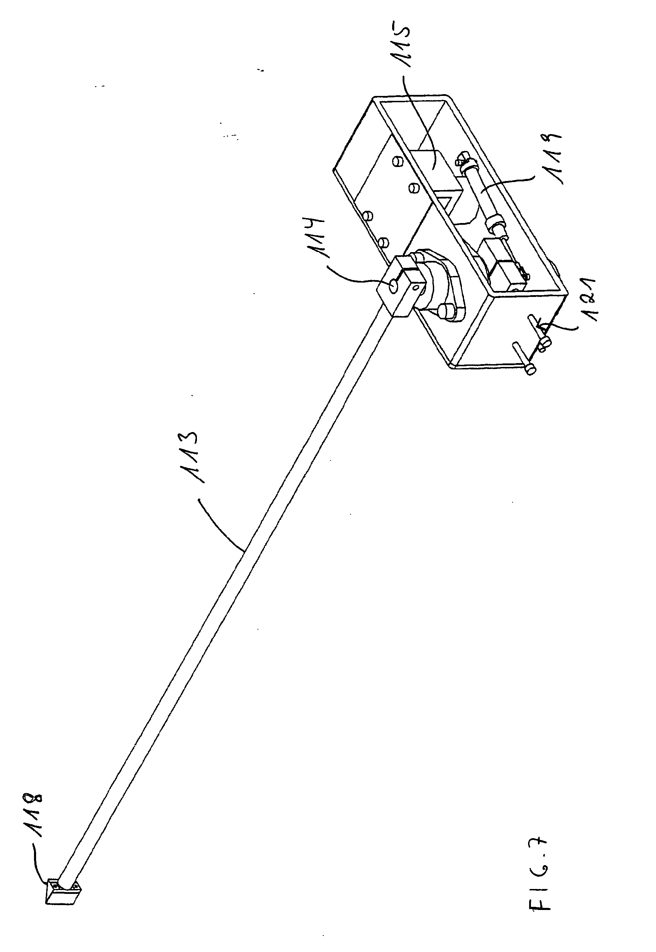

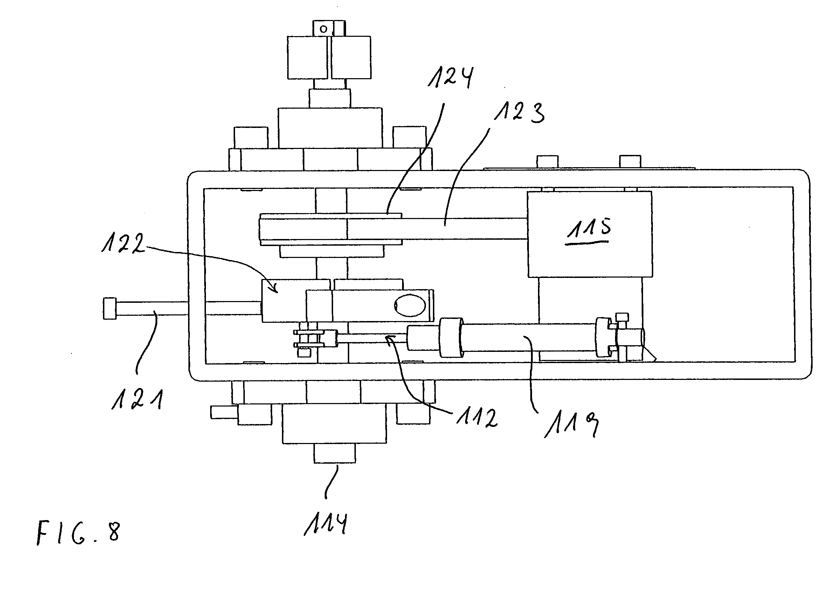

In order that the arm 113 has a certain biased load during its contact with the edge 106 of the stack 102, the arm 113 may be loaded with a spring. However, it is preferred that the bias of the arm 113 is provided with a hydraulic or pneumatic device, as shown on Figs 7 and 8, where a pneumatic cylinder 119 is provided eccentrically in relation to the axle 114, and where a turning of the arm 113 causes a displacement of the cylinder piston 120 in the cylinder 119. Such pneumatic device allows adjustment of the force and the speed by which the arm 113 returns after the stack 102 has been moved past the arm 113. In order to adjust the rest position of the arm 113, there is provided adjustment screws 121 in connection with an end stop 122 for the arm 113.

The encoder 115 is a rotating encoder with an encoder axle rotating in the encoder 115. During rotation of the encoder axle, the encoder transmits pulses that are transformed to data for use in subsequent calculation, where the data are transferred to a computer 127 with display 128 which is functionally connected 129 with the encoder 115, as shown on Fig. 1. For example, one revolution of the encoder axle may provide 500 pulses. In order to more accurately determine the position of the arm 113, in the shown embodiment it has been decided to connect the axle 114 of the arm 113 with the encoder axle by means of a gear, e.g. with a gear ratio of 10. This is achieved in a simple way by a belt 123 connecting the encoder axle with a wheel 124 on the axle 114 of the arm 113.

By computer calculations, the encoder data from rotation of the measuring arm 113, 113' may be transformed to the movement of the measuring arm 113, and in a further calculation to the edge sections where the measuring arm 113 touches the edge 106 of the stack, e.g. straight sections of parts of the edge 106. Hereby, stack orientation and stack position in the work station may be determined, if regard is also made to the advance of the conveyor 103, i.e. the position of the stack during the movement.

If the width of a stack 102 is known, it is only necessary with one arm 113. If the contour of the stack 102 is only pre-programmed to such degree that length and width are not known, but it is certain that it is a rectangular contour, both the length and the width of the stack may be calculated by means of two measuring arms 113, 113'.

In case of rectangular stacks 102 or other angular stacks where the edges are not sharp, it is expedient if the pre-programming also includes the radii of the vertical edges 116. If the vertical edges 116 are very rounded, there is risk that the measuring arms 113, 113' during the function cause a measurement more defective than acceptable. In that case, it is an advantage that the work station is provided with a unit 112 with photocell and light emitter as described in connection with the finishing station 109, or that such unit 112 is disposed before the work station 101. Alternatively, a light emitter 125 and photocell 126 may be disposed at each their side of the conveyor 103. The light from the light emitter impinges on the photocell if no objects are placed on the conveyor between the light emitter 125 and the photocell 126. The photocell 126 is functionally connected with the indication of position of the conveyor 103 for by interruption of the light from the light emitter 125 to determine the position of the leading point of the stack and optionally the trailing point of the stack on the conveyor 103 while moving the stack 102. Hereby, the projected side length of the stack is measured.

For practical reasons it may be suitable to use two sets of photocells/light emitters 125, 125', 126, 126', where one set 125', 126' is used for registering that a stack 102 is about to be in place, whereas the other set 125, 126, as mentioned above, forms part of the measuring system.

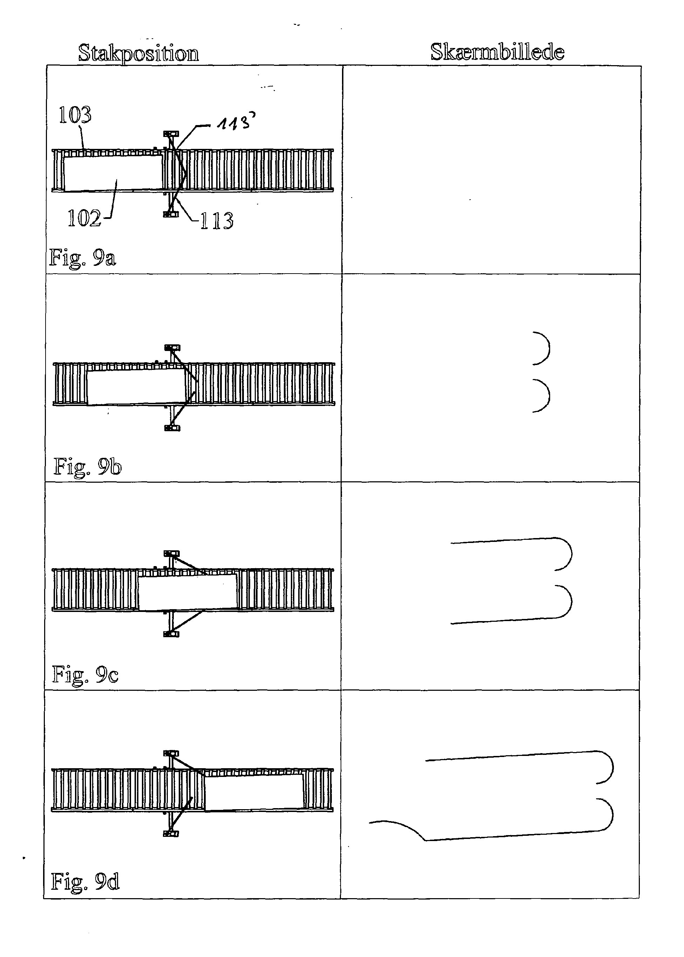

On Fig. 9 is illustrated a sequence of momentary images for different times, while the stack 102 is moved on the conveyor 103 past the arms 113, 113'. In Fig. 9a is shown the situation where the arm 113 is in its rest position just before the stack 102 is going to hit the arm 113. On Fig. 9b, the stack 102 has hit the arm 113 with one comer and has pushed the arm in a movement where the point 117 of the arm 113 performs a curving movement. At the point shown in Fig. 9c, the stack is advanced so far that the point 117 of the arm 113 has contact with the straight side of the stack 113, where the point of the arm 113 in the moving reference system of the stack performs a linear movement along the edge 106 of the stack 102 until the point 117 of the arm 113 is again leaving the straight part of the stack 113 edge 106, as shown on Fig. 9d, and is then pivoting back to its initial position.

If the encoder signals are transformed to digital data and are used for converting into (x,y) coordinates and compared with the data from the position indication of the conveyor, this may be depicted in diagrams for the sake of illustration, as e.g. shown in the right side of Fig. 9, which is a simplified draft of the image on a computer display. The curves at right on Fig. 9 illustrate the path that the points 117, 118 of the arms 113, 113' run through in the reference system of the stack. The straight section on the curves reflects the straight edge section from the stack 102, and the distance between the straight sections on the curves reflect the width of the stack. This is illustrating that the two measuring arms are sufficient for characterising the edge contour for a stack of plates if these are rectangular.

The signals of the encoder are transformed into digital data that are converted to an angle whereby the coordinates of the point 117, with knowledge of the length of the arm 113, are given in a polar coordinate system. By converting these polar coordinates into Cartesian coordinates x and y and under consideration of the movement of the stack - where the data from the position indication of the conveyor can be used - a path as shown at the right on Fig. 9 may be calculated in a simple manner. By using one or more arms 11 for measuring orientation of the stack 102 is achieved a simple and inexpensive system for calculating the edge contour of the stack and also the path of the robot arm required for the stack to be machined in the most expedient way.

It is noted that the indications of dimensions on the Figures are only examples and are in no way limiting for the scope of the invention.

## Claims

1. Method for machining stacks of plates or sheets, preferably by grinding stacks, including the steps:
- where the contours of the sheets in the stack are pre-programmed in a computer program;
- where a stack of sheets is moved to a work station with an edge machining tool;
- where at least one measuring arm is provided, following a part of the edge of the stack while moving the stack past the at least one measuring arm, which results in a movement of the at least one measuring arm;
- where the position and the movement of the at least one measuring arm is measured with measuring equipment for determining the orientation of the stack and the position of the stack in the work station with a computer and by the pre-programmed contours; and
- where the stack is machined with regard to the pre-programmed contours and the determined stack orientation and stack position.

2. Method according to claim 1, wherein the measuring equipment includes at least one encoder which is functionally connected with the at least one measuring arm, where data from the at least one encoder is indicative for the position of the at least one measuring arm, and where the data from the at least one encoder is used for determining the stack orientation and the stack position in the work station.

3. Method according to claim 1 or 2, wherein the measured movement from the at least one measuring arm is approximated to straight lengths and/or circular arcs, where these straight lengths and/or circular arcs are compared with the pre-programmed contours of the sheets in the stack in order thereby to determine the stack orientation and the stack position.

4. Method according to any preceding claim, wherein the contours are pre-programmed parametrically as rectangular items with variable width, that two measuring arms are provided and which are disposed at opposite sides of the stack, and where the width and the length are determined from the measurement with the two measuring arms.

5. Method according to claim 4, wherein the contours are parametrically pre-programmed containing information about edge radius of the sheets in the stack.

6. Method according to any of claims 1 - 3, where the contours of the stack are pre-programmed by means of CAD- data.

7. Method according to any preceding claim, wherein the stack is moved on a conveyor with indication of position, that the leading point of the stack, or the trailing point of the stack, or both the leading and trailing points of the stack on the conveyor are determined, and this point or these points, respectively, are related to the indication of position in order thereby to determine the position of the stack on the conveyor in the longitudinal direction of the conveyor.

8. Method according to claim 7, wherein there is provided a photocell and a light emitter arranged at each their side of the conveyor, so that the light from the light emitter impinges on the photocell if no objects are placed on the conveyor between the light emitter and the photocell, where the photocell is functionally connected with the position indication for by interruption of the light from the light emitter to determine the position of the leading point of the stack and optionally the trailing point of the stack on the conveyor during movement of the stack.

9. Apparatus for machining a stack of plates or sheets, preferably grinding of stacks, including:
- a computer which is pre-programmed with the contours of the stack;
- a conveyor for moving the stack to a work station;
- a measuring arm provided for following a part of the edge of the stack during movement of the stack past the measuring arm, resulting in moving the measuring arm;
- measuring equipment for measuring the position of the measuring arm; and
- a computer functionally coupled to the measuring equipment and configured to receive data indicating position and movement of the measuring arm and together with the pre-programmed contours to determine the orientation and the position of the stack in the work station.

10. Apparatus according to claim 9, wherein the measuring equipment includes an encoder functionally connected with the measuring arm, where data from the encoder are indicative for the position of the measuring arm.

11. Apparatus according to claim 9 or 10, wherein the at least one measuring arm is provided rotatably at the side of the conveyor and extends partly in over the conveyor.

12. Apparatus according to any of claims 9 - 11, wherein the conveyor is provided with position indication that indicate the position of the conveyor in relation to a selected reference point.

13. Apparatus according to any of claims 9 - 11, wherein the apparatus includes a photocell and a light emitter arranged at each their side of the conveyor so that the light from the light emitter impinges on the photo cell if no objects are placed on the conveyor between the light emitter and the photocell, where the photocell is functionally connected with the position indication for by interruption of the light from the light emitter to determine the position of the leading point of stack and optionally the trailing point of the stack on the conveyor during movement of the stack.

14. Apparatus according to any of claims 9 - 13, wherein the apparatus also includes a finishing treatment station for finishing the stack, e.g. coating the stack, where the computer is configured to use the stack position and stack orientation of the first work station for determining the stack position and the stack orientation in the finishing treatment station.

15. Apparatus according to any of claims 9 - 14, wherein the apparatus also includes a robot arm with a further light emitter and with a further photocell, where the further photocell is arranged to receive light from the further light emitter, where this light is reflected from the upper surfaces of the stack for determining the sectional structure of the stack, e.g. a structure like a pyramid.

16. Apparatus according to any of claims 9 - 15, wherein the apparatus also includes at least one holder device that presses upon the stack for preventing the stack from being displaced during machining in the work station.

17. Apparatus according to any of claims 9 - 16, wherein the apparatus includes a robot arm for edge machining of the stack in the work station, where the robot arm is functionally coupled to the computer for determining the movement of the robot arm relative to the edge course of the stack from the pre-programmed contours, the stack position and the stack orientation.
